# EUROPÄISCHE PATENTSCHRIFT

(11) **EP 1 370 834 B1**
(45) Veröffentlichungstag und Bekanntmachung des Hinweises auf die Patenterteilung: **18.06.2008**
(21) Anmeldenummer: 02719886.0
(22) Anmeldetag: 21.02.2002
(51) Int. Cl.: G01D 5/249

(54) **VERFAHREN ZUM BETRIEB EINER POSITIONSMESSEINRICHTUNG UND HIERZU GEEIGNETE POSITIONSMESSEINRICHTUNG**
METHOD FOR OPERATING A POSITION MEASURING DEVICE AND POSITION MEASURING DEVICE SUITABLE THEREFOR
PROCEDE D'UTILISATION D'UN DISPOSITIF DE MESURE DE POSITION ET DISPOSITIF DE MESURE DE POSITION ADAPTE A CET EFFET

(30) Priorität: 09.03.2001 DE 10111630
(43) Veröffentlichungstag der Anmeldung: 17.12.2003
(73) Patentinhaber: Dr. Johannes Heidenhain GmbH, 83292 Traunreut (DE)
(72) Erfinder: STRASSER, Erich, 83308 Trostberg (DE)
(86) Internationale Anmeldenummer: PCT/EP2002/001821
(87) Internationale Veröffentlichungsnummer: WO 2002/073135

(56) Entgegenhaltungen:
- US-A- 5 406 077
- US-A- 6 091 219

## Beschreibung

Die vorliegende Erfindung betrifft ein Verfahren zum Betrieb einer Positionsmesseinrichtung sowie eine hierzu geeignete Positionsmesseinrichtung.

Bekannte Positionsmesseinrichtungen werden üblicherweise von der nachgeordneten Auswerteeinheit bzw. Steuerungseinheit über ein Verbindungskabel mit einer definierten Betriebsspannung versorgt. Die Betriebs- bzw. Versorgungsspannung muss zur Aufrechterhaltung des korrekten Betriebs der Positionsmesseinrichtung innerhalb vorgegebener Toleranzgrenzen liegen. Entlang des Verbindungskabels resultiert in der Regel ein bestimmter Spannungsabfall. Damit der Spannungsabfall möglichst gering ausfällt, muss die Stromaufnahme bzw. die Verlustleistung der Positionsmesseinrichtung klein gehalten werden. Um dies zu gewährleisten ist bekannt, die Lichtquelle der Positionsmesseinrichtung als einen der größten Stromverbraucher im System nicht kontinuierlich, sondern getaktet zu betreiben. Beispielsweise sei in diesem Zusammenhang auf die US 4,079,251 verwiesen; dort ist der getaktete Lichtquellenbetrieb in einer batteriegepufferten, inkrementalen Positionsmesseinrichtung offenbart. Die Taktfrequenz der Lichtquelle bzw. die Taktdauer zwischen den einzelnen Lichtpulsen wird im vorgeschlagenen System aufgrund einer Abschätzung der maximalen Ausgangsfrequenz der erzeugten Inkrementalsignale der Positionsmesseinrichtung gewählt.

Aufgabe der vorliegenden Erfindung ist es, ein Verfahren zum Betrieb einer Positionsmesseinrichtung, das eine möglichst geringe Stromaufnahme der Positionsmesseinrichtung im Messbetrieb sicherstellt.
Ferner ist Aufgabe der vorliegenden Erfindung, eine geeignete Positionsmesseinrichtung anzugeben, bei der eine möglichst geringe Stromaufnahme der Positionsmesseinrichtung im Messbetrieb sichergestellt ist.

Die Druckschriften US-A-5 406 077 und US-A-6 091 219 offenbaren Verfahren, wobei auf ein Abfragesignal ein Lichtquellensignal ausgelöst wird.

Erfindungsgemäß wird nunmehr der getaktete Impulsbetrieb der Lichtquelle gezielt auf die jeweilige Auswerteeinheit bzw. deren Abfrage-Taktzeiten abgestimmt. Über die Auswerteeinheit werden in der Regel in einem zeitlich festen Taktraster mittels Abfragetaktpulsen Daten, wie z.B. absolute Positionsdaten, von der Positionsmesseinrichtung angefordert. Die Synchronisation der Lichtquellen-Taktzeiten mit den jeweiligen Abfrage-Taktzeiten bzw. die Abstimmung der Lichtquellen-Taktzeiten auf die Abfrage-Taktzeiten erfolgt vorzugsweise in einer Initialisierungsphase vor dem eigentlichen Messbetrieb.

Besonders vorteilhaft erweist es sich, wenn zur Synchronisation der Lichtquellen-Taktzeiten mit den jeweiligen Abfrage-Taktzeiten ferner noch eine systemspezifische Verzögerungszeit berücksichtigt wird. Diese Verzögerungszeit resultiert aufgrund verschiedener systemspezifischer Einflüsse zwischen der Aussendung des Lichtpulses von der Lichtquelle bis zur tatsächlichen Bestimmung der jeweiligen Daten in der Positionsmesseinrichtung. Aufgrund der zusätzlichen Berücksichtigung einer derartigen Verzögerungszeit ergibt sich eine nochmals gesteigerte Präzision bei der absoluten Positionsbestimmung. Die systemspezifische Verzögerungszeit kann hierbei ebenfalls in der erwähnten Initialisierungsphase messtechnisch bestimmt werden; alternativ kann jedoch auch ein bestimmter Wert für die systemspezifische Verzögerungszeit fest vorgegeben werden.

Es resultiert somit eine optimale Anpassung des getakteten Lichtquellen-Betriebes an die jeweilige Auswerteeinheit bzw. an die jeweilige Konfiguration aus Positionsmesseinrichtung und Auswerteeinheit; neben dem stromsparenden Betrieb der Lichtquelle ist dadurch auch eine präzise Erfassung der Absolutposition sichergestellt, wenn es sich bei den übertragenen Daten um absolute Positionsdaten handelt.

Alternativ zur Übertragung von absoluten Positionsdaten kann auch die Übertragung anderer Daten von der Positionsmesseinrichtung zur Auswerteeinheit im Rahmen der vorliegenden Erfindung vorgesehen sein. Hierbei kann es sich beispielsweise um Geschwindigkeits- und/oder Beschleunigungsdaten handeln, die aufgrund der ermittelten Messwerte in der Positionsmesseinrichtung berechnet und zur Übertragung aufbereitet werden.

Weitere Vorteile sowie Einzelheiten der vorliegenden Erfindung ergeben sich aus der nachfolgenden Beschreibung eines Ausführungsbeispieles anhand der beiliegenden Figuren.
Dabei zeigt
- Figur 1: ein schematisiertes Blockschaltbild eines Ausführungsbeispieles der erfindungsgemäßen Positionsmesseinrichtung inklusive nachgeordneter Auswerteeinheit;
- Figur 2a - 2c: jeweils ein Signaldiagramm zur Erläuterung des erfindungsgemäßen Verfahrens;
- Figur 3: ein Flussdiagramm zur Erläuterung des erfindungsgemäßen Verfahrens.

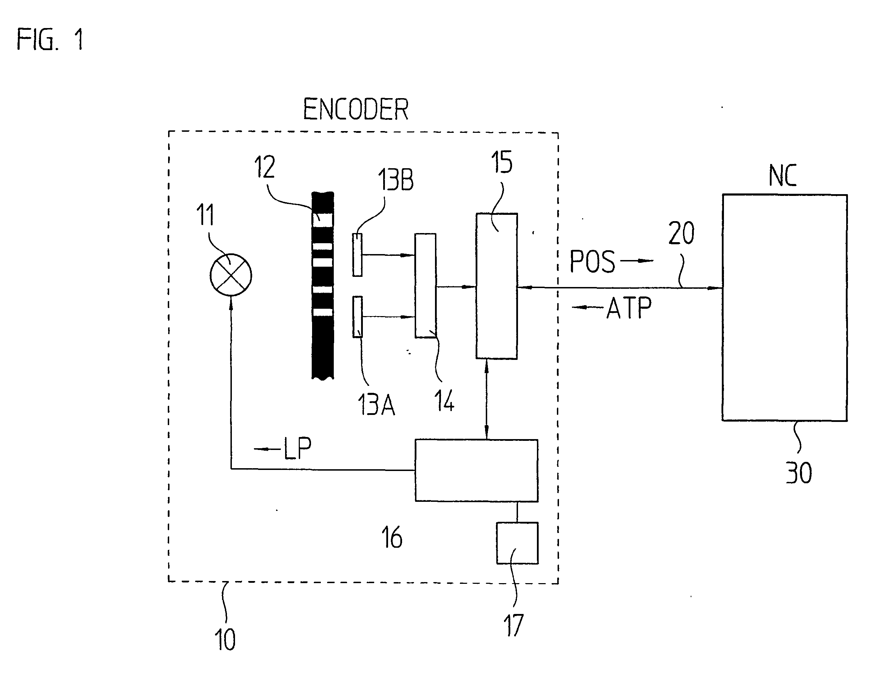

Ein Blockschaltbild eines Ausführungsbeispieles der erfindungsgemäßen Positionsmesseinrichtung 10 ist in Figur 1 in Verbindung mit einer nachgeordneten Auswerteeinheit 30 schematisiert dargestellt. Ebenfalls lediglich in schematischer Form ist in dieser Figur eine Verbindungsleitung 20 zwischen der Positionsmesseinrichtung 10 und der Auswerteeinheit 30 dargestellt. Über die Verbindungsleitung 20 erfolgt sowohl die Kommunikation zwischen der Positionsmesseinrichtung 10 und der Auswerteeinheit 30 als auch die Stromversorgung der Positionsmesseinrichtung 10. Vorzugsweise ist eine serielle, bidirektionale Datenübertragung zwischen der Positionsmesseinrichtung 10 und der Auswerteeinheit 20 vorgesehen. Selbstverständlich kann die Verbindungsleitung 20 auch mehrere einzelne Verbindungsleitungen umfassen. Zur konkreten Ausgestaltung der Kommunikations- und/oder Versorgungs-Verbindung zwischen der Positionsmesseinrichtung 10 und der Auswerteeinheit 30 kommen grundsätzlich eine Reihe bekannter Varianten in Betracht.

Die Positionsmesseinrichtung 10 ist in diesem Beispiel zur absoluten Positionsbestimmung zweier zueinander beweglicher Objekte geeignet, beispielsweise zur Erfassung der Werkzeugposition in einer numerisch gesteuerten Werkzeugmaschine; als Auswerteeinheit 20 fungiert in diesem Fall dann eine numerische Werkzeugmaschinensteuerung.
Die als optische Positionsmesseinrichtung 10 ausgebildete Positionsmesseinrichtung 10 umfasst einen Maßstab 12, der mit Hilfe einer relativ hierzu beweglichen Abtasteinheit abgetastet wird. Hierzu sind auf Seiten der Abtasteinheit eine Lichtquelle 11 sowie ein oder mehrere optoelektronische Detektorelemente 13A, 13B angeordnet. Der Maßstab 12 weist eine Teilungsstruktur auf, die es gestattet eine definierte Absolutposition aufgrund der resultierenden Abtastsignale zu bestimmen. Bei der abgetasteten Teilungsstruktur kann es sich etwa um eine geeignete Code-Struktur in einer oder mehreren Spuren handeln; alternativ sind jedoch auch andere bekannte Teilungsstrukturen im Rahmen der vorliegenden Erfindung auf dem Maßstab 12 einsetzbar, die eine absolute Positionsbestimmung ermöglichen.

Die Positionsmesseinrichtung 10 kann sowohl zur Erfassung linearer Bewegungen als auch zur Erfassung rotatorischer Bewegungen ausgelegt sein.

Die von den Detektorelementen 13A, 13B registrierten Abtastsignale werden auf Seiten der Positionsmesseinrichtung 10 einer Signalverarbeitungseinheit 14 zugeführt, die aus den Abtastsignalen die jeweiligen absoluten Positionsdaten POS bestimmt. Über eine nachgeordnete Schnittstelleneinheit 15 und die Verbindungsleitung 20 werden die geeignet aufbereiteten absoluten Positionsdaten POS als serielles Datenwort an die Auswerteeinheit 30 zur Weiterverarbeitung übertragen. Im eigentlichen Messbetrieb erfolgt die Übertragung der absoluten Positionsdaten POS hierbei derart, dass die Auswerteeinheit 30 mittels Abfragetaktpulsen ATP die Übertragung absoluter Positionsdaten POS von der Positionsmesseinrichtung 10 anfordert; auf den Abfragetaktpuls ATP hin wird darauf in der Positionsmesseinrichtung 10 die aktuelle Absolutposition bestimmt und das entsprechende Datenwort an die Auswerteeinheit 30 übertragen.

Im vorliegenden Ausführungsbeispiel werden demzufolge absolute Positionsdaten POS als Daten von der Positionsmesseinrichtung 10 an die nachgeordnete Auswerteeinheit 30 übertragen. Wie bereits oben angedeutet, kann es sich bei den übertragenen Daten jedoch auch um andere Daten handeln, die in der Positionsmesseinrichtung 10 auf Grundlage von Messwerten berechnet werden, möglich wäre etwa die Übertragung von berechneten Geschwindigkeits- und/oder Beschleunigungsdaten usw.. Nachfolgend sei bei der Erläuterung dieses Ausführungsbeispieles in Verbindung mit den übertragenen Daten jedoch stets von absoluten Positionsdaten die Rede.

Abhängig vom jeweiligen Typ der Auswerteeinheit 30 erfolgt die Anforderung der absoluten Positionsdaten POS mittels Abfragetaktpulsen ATP, die durch bestimmte Abfrage-Taktzeiten Δt_{NC} getrennt sind, d.h. in einem üblicherweise festen Taktraster. Die Abfrage-Taktzeit Δt_{NC} einer als Werkzeugmaschinensteuerung ausgebildeten Auswerteeinheit beträgt etwa Δt_{NC} ≅ 125µsec.

Erfindungsgemäß wird zur Reduzierung der Stromaufnahme der Positionsmesseinrichtung 10 die Lichtquelle 11 nicht kontinuierlich, sondern getaktet betrieben. Die entsprechende Ansteuerung der Lichtquelle 11 erfolgt über eine schematisch angedeutete Lichtquellen-Ansteuerungseinheit 16 in der Positionsmesseinrichtung 10. Die Lichtquellen-Ansteuerungseinheit 16 ist hierzu sowohl mit der Lichtquelle 11 als auch mit der Schnittstelleneinheit 15 und damit auch mit der Auswerteeinheit 30 verbunden. Zur getakteten Erregung der Lichtquelle 11 wird diese von der Lichtquellen-Ansteuerungseinheit 16 in einem geeigneten Taktraster mit Lichtquellen-Erregerpulsen LP beaufschlagt. Der zeitliche Abstand zwischen zeitlich aufeinanderfolgenden Lichtquellen-Erregerpulsen LP wird nachfolgend als Lichtquellen-Taktzeit Δt_{LQ} bezeichnet.

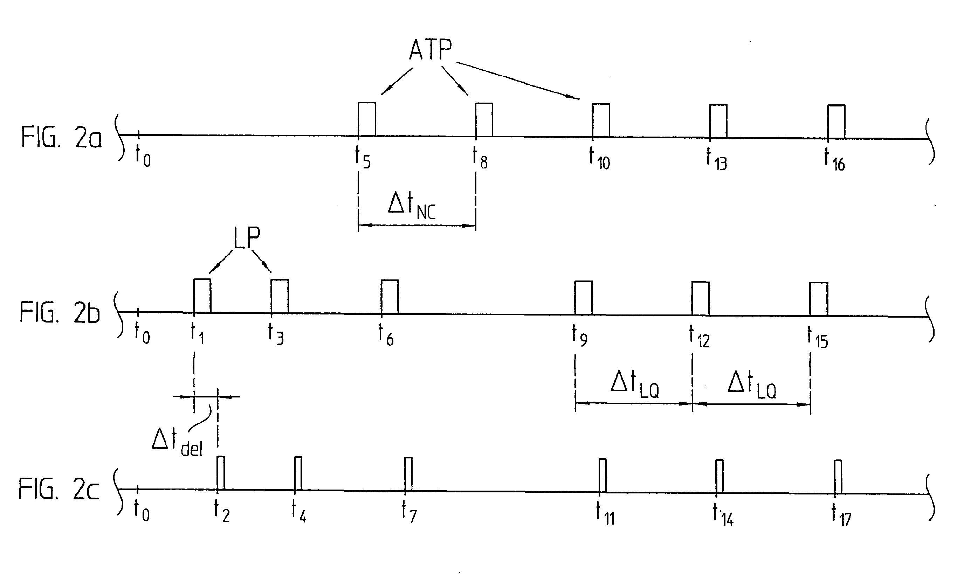

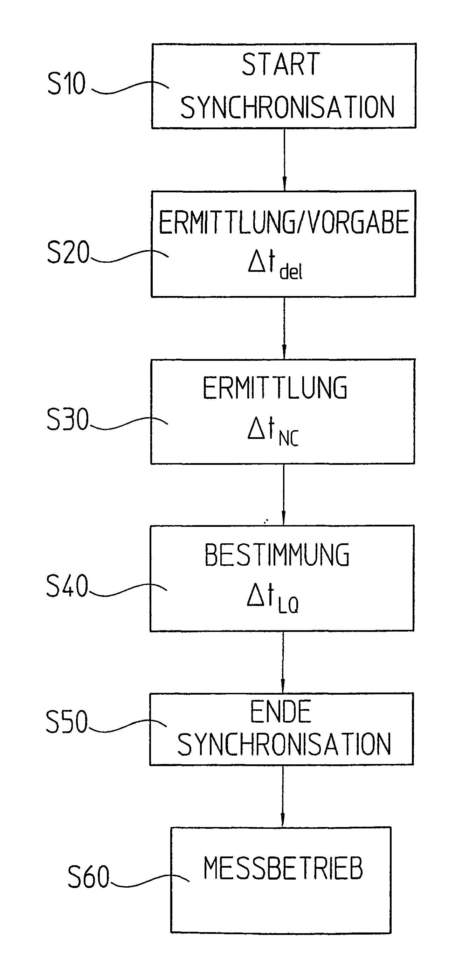

Anhand der nachfolgenden Figuren 2a - 2c und 3 sei nunmehr erläutert, wie erfindungsgemäß die Lichtquellen-Taktzeit Δt_{LQ} in Abhängigkeit der Abfrage-Taktzeit Δt_{NC} der Auswerteeinheit 30 bestimmt wird. Ziel der Abstimmung der Lichtquellen-Taktzeit Δt_{LQ} mit der Abfrage-Taktzeit Δt_{NC} ist die Herstellung einer zeitlichen Synchronität zwischen den Lichtquellen-Erregerpulsen LP und den Abfragetaktpulsen ATP. Diese Abstimmung erfolgt für eine bestimmte Konfiguration aus Positionsmesseinrichtung 10 und Auswerteeinheit 30 vorzugsweise in einer Synchronisationsphase vor dem eigentlichen Messbetrieb.

In Figur 3 ist ein Flussdiagramm dargestellt, anhand dessen nachfolgend der Ablauf verschiedener Verfahrensschritte in Verbindung mit den Figuren 2a - 2c an einem Beispiel erläutert wird. Figur 2a zeigt den zeitlichen Verlauf der Abfrage-Taktpulse ATP, Figur 2b den zeitlichen Verlauf der Lichtquellen-Erregerpulse LP und Figur 2c die zeitliche Relativlage der Positionsbestimmungs-Zeitpunkte zu den Abfrage-Taktpulsen ATP und den Lichtquellen-Erregerpulsen LP in der Synchronisationsphase und zu Beginn der anschließenden Messbetriebes.

Zum Zeitpunkt t₀ beginnt im dargestellten Beispiel die dem eigentlichen Messbetrieb vorangehende Synchronisationsphase (Schritt S10). Im Rahmen des ersten Verfahrensschrittes S20 wird zum Zeitpunkt t₁ über einen ersten Lichtquellen-Erregerpuls LP die Lichtquelle für kurze Zeit pulsförmig angeregt. Aufgrund verschiedener signalverzögernder Einflüsse erfolgt nicht zeitgleich zum Zeitpunkt t₁ die Bestimmung der aktuellen absoluten Positionsdaten in der Positionsmesseinrichtung, sondern erst zu einem späteren Zeitpunkt t₂, wie dies in Fig. 2c ersichtlich ist. Zwischen den Zeitpunkten t₁ und t₂ liegt somit eine systemspezifische Verzögerungszeit Δt_{del}, die im Verfahrensschritt S20 zunächst bestimmt wird. Typischerweise liegt die Verzögerungszeit Δt_{del} in der Größenordnung weniger msec und wird u.a. durch Signallaufzeiten und erforderliche Einschwingzeiten verschiedener Elektronikkomponenten verursacht.

Im dargestellten Beispiel wird im Verlauf des Verfahrensschrittes S20 anschließend durch nochmaliges, pulsförmiges Erregen der Lichtquelle zum Zeitpunkt t₃ und Bestimmung der aktuellen absoluten Positionsdaten zum Zeitpunkt t₄ die vorher ermittelte Verzögerungszeit Δt_{del} überprüft; grundsätzlich ist dies jedoch nicht zwingend erforderlich.

Ebenso sei an dieser Stelle darauf hingewiesen, dass im Schritt S20 im Rahmen des erfindungsgemäßen Verfahrens nicht zwingend erforderlich ist, die Verzögerungszeit Δt_{del} messtechnisch zu bestimmen; es kann vielmehr aufgrund bekannter Systemeinschwingzeiten ein bestimmter Wert für die Verzögerungszeit Δt_{del} von außen fest vorgegeben werden.

Im anschließenden Verfahrensschritt S30 erhält zum Zeitpunkt t₅ die Positionsmesseinrichtung einen ersten Abfrage-Taktpuls ATP von der nachgeordneten Auswerteeinheit. Im zeitlichen Abstand Δt_{NC} folgt zum Zeitpunkt t₈ der zweite Abfrage-Taktpuls ATP. Im Verfahrensschritt S30 wird nunmehr der zeitliche Abstand Δt_{NC} zwischen aufeinanderfolgenden Abfrage-Taktpulsen ATP bestimmt, d.h. es wird das Taktraster der Abfrage-Taktpulse ermittelt. Üblicherweise arbeiten die entsprechenden Auswerteeinheiten im Messbetrieb mit einem zeitlichen Taktraster, das sich während des Messbetriebes nicht ändert.

Das Ermitteln des zeitlichen Abstandes Δt_{NC} zwischen aufeinanderfolgenden Abfrage-Taktpulsen ATP erfolgt hierbei etwa mithilfe eines hochfrequenten Oszillatorbausteines und eines damit gekoppelten Zählers.
Ebenso kann im Fall der vorgesehenen messtechnischen Ermittlung der systemspezifischen Verzögerungszeit Δt_{del} diese bestimmt werden.

Die derart ermittelten bzw. ggf. vorgegebenen Größen Δt_{NC} und Δt_{del} werden anschließend in einem Speicher der Positionsmesseinrichtung abgelegt; ein entsprechender Speicher ist in Figur 1 mit dem Bezugszeichen 17 bezeichnet.

Im folgenden Verfahrensschritt S40 wird nach der Bestimmung der Abfrage-Taktzeit Δt_{NC} und der Verzögerungszeit Δt_{del} die Lichtquellen-Taktzeit Δt_{LQ} gewählt bzw. bestimmt. Dies bedeutet, dass die Lichtquellen-Taktzeit auf die Abfrage-Taktpulse ATP bzw. deren Taktraster abgestimmt wird. Im vorliegenden Beispiel wird bei dieser Abstimmung des weiteren die systemspezifische Verzögerungszeit Δt_{del} berücksichtigt. Dies bedeutet, dass nach Bestimmung der Lichtquellen-Taktzeit Δt_{LQ} im nachfolgenden Betrieb die Lichtquellen-Erregerpulse LP stets zu einem derartigen Zeitpunkt erzeugt werden, dass zum Zeitpunkt des darauf erwarteten Abfrage-Taktpulses in der Positionsmesseinrichtung bereits die Bestimmung der aktuellen absoluten Positionsdaten erfolgt.

Die Synchronisationsphase ist mit dem Schritt S50 beendet und es kann sich gemäß Schritt S60 der eigentliche Messbetrieb anschließen.

Im dargestellten Beispiel wird im Messbetrieb demzufolge zum Zeitpunkt t₉, d.h. kurz vor dem zum Zeitpunkt t₁₀ erwarteten Abfrage-Taktpuls ATP, bereits ein Lichtquellen-Erregerpuls LP erzeugt. Bis zum Zeitpunkt t₁₀, zu dem dann der erwartete Abfrage-Taktpuls ATP folgt, ist dann das System soweit eingeschwungen, dass die absolute Positionsbestimmung erfolgen kann. Die zum Zeitpunkt t₁₁ in der Positionsmesseinrichtung erfolgende absolute Positionsbestimmung ist dann mit dem Abfrage-Taktpuls ATP zeitlich synchronisiert. Analog hierzu erfolgt dies dann im nachfolgenden Messbetrieb zu jedem erwarteten Abfrage-Taktpuls ATP usw..

Im Rahmen der vorliegenden Erfindung sind nunmehr auch verschiedenste Modifikationen möglich.

Grundsätzlich wäre es auch möglich, die systemspezifische Verzögerungszeit Δt_{del} bei der Synchronisation der Lichtquellen-Taktzeit Δt_{LQ} mit der Abfrage-Taktzeit Δt_{NC} nicht zu berücksichtigen, beispielsweise, wenn in einer entsprechenden Konfiguration einer Positionsmesseinrichtung diese Größe vernachlässigbar klein ist.

Vorzugsweise wird die Synchronisation wie oben beschrieben vor dem eigentlichen Messbetrieb durchgeführt; in der Synchronisationsphase sollten sich die zueinander beweglichen Objekte im Stillstand befinden. Resultiert in der Synchronisationsphase jedoch versehentlich eine Relativbewegung, so wird ein Warnsignal erzeugt, um dies dem jeweiligen Anwender anzuzeigen. Als Warnsignal kann etwa ein Alarmbit von der Positionsmesseinrichtung an die Auswerteeinheit übertragen werden. Grundsätzlich sind jedoch auch andere Arten von Warnsignalen denkbar, etwa akustische, visuelle usw..

Die oben erläuterte Synchronisation stellt darauf ab, dass sich im eigentlichen Messbetrieb das zeitliche Taktraster der Abfrage-Taktpulse ATP nicht ändert. Es ist daher vorteilhaft, die Abfrage-Taktzeiten auch im Messbetrieb weiterhin zu überwachen und im Fall einer sich ggf. verändernden Abfrage-Taktzeit Δt_{NC} ebenfalls ein Warnsignal für den Anwender zu erzeugen. Auch dies kann wiederum als Alarmbit erfolgen, das zur Auswerteeinheit übertragen wird; alternativ kann wiederum ein visuelles oder akustisches Warnsignal erzeugt werden. In diesem Fall wäre dann der Messbetrieb zu unterbrechen und erneut die oben erläuterte Synchronisation durchzuführen.

Alternativ zur Erzeugung eines Warnsignales kann im Stillstandsfall auch umgehend bzw. sofort ein Lichtquellen-Erregerpuls erzeugt werden, um absolute Positionsdaten auf der Seite der Positionsmesseinrichtung zu erzeugen und die Synchronisationsphase erneut zu starten.

Ferner sei abschließend noch einmal auf die Möglichkeit verwiesen, auch andere Daten als die erwähnten absoluten Positionsdaten in der erläuterten Art und Weise zu übertragen.

Im Rahmen der vorliegenden Erfindung existieren somit neben dem erläuterten Beispiel eine Reihe von weiteren Ausführungsvarianten.

## Patentansprüche

1. Verfahren zum Betrieb einer optischen Positionsmesseinrichtung zur Positionsbestimmung zweier zueinander beweglicher Objekte, wobei
- von der Positionsmesseinrichtung (10) aus Daten an eine nachgeordnete Auswerteeinheit (30) übertragen werden, indem die Auswerteeinheit (30) mittels Abfragetaktpulsen (ATP), die durch bestimmte Abfrage-Taktzeiten (Δt_{NC}) getrennt sind, die Übertragung von Daten von der Positionsmesseinrichtung (10) anfordert,
- die Lichtquelle (11) der Posidonsmesselnrichtung (10) getaktet betrieben wird, wobei zwischen zeitlich aufeinanderfolgenden Lichtquellen-Erregerpulsen (LP) eine definierte Lichtquellen-Taktzeit (Δt_{LQ}) liegt;
**dadurch gekennzeichnet, dass**
- in einer Initialisierungsphase die Lichtquellen-Taktzeit (Δt_{LQ}) gezielt auf die Abfrage-Taktzeit (Δt_{NC}) zwischen den Abfragetaktpulsen (ATP) abgestimmt wird, so dass im Messbetrieb eine zeitliche Synchronität zwischen den Lichtqueilen-Erregerpuisen (LP) und den Abfragetaktpulsen (ATP) gewährleistet ist

2. Verfahren nach Anspruch 1, wobei von der Positionsmesseinrichtung (10) absolute Positionsdaten (POS) als Daten an die Auswerteeinheit übertragen werden.

3. Verfahren nach Anspruch 2, wobei zur Synchronisation der Lichtquellen-Taktzeit (Δt_{LQ}) mit der Abfrage-Taktzeit (Δt_{NC}) des weiteren eine systemspezifische Verzögerungszeit (Δt_{del}) berücksichtigt wird, die zwischen einem Lichtpuls (LP) und der tatsächlichen Bestimmung der Daten in der Positionsmesseinrichtung (10) resultiert.

4. Verfahren nach Anspruch 1, wobei in der Synchronisationsphase sich die zueinander beweglichen Objekte im Stillstand befinden.

5. Verfahren nach Anspruch 4, wobei im Fall einer Relativbewegung der beiden Objekte in der Synchronisationsphase ein Warnsignal erzeugt wird.

6. Verfahren nach Anspruch 1, wobei die Abfrage-Taktzeit (Δt_{NC}) überwacht wird und im Fall einer sich verändernden Abfrage-Taktzeit (Δt_{NC}) ein Warnsignal erzeugt wird.

7. Verfahren nach Anspruch 6, wobei nach der Erzeugung des Warnsignales erneut die Synchronisation durchgeführt wird.

8. Verfahren nach Anspruch 6, wobei als Warnsignal ein Alarmbit von der Positionsmesseinrichtung (10) an die Auswerteeinheit (30) übertragen wird.

9. Verfahren nach Anspruch 4, wobei in der Synchronisationsphase die Abfrage-Taktzeit (Δt_{NC}) der jeweiligen Auswerteeinheit (30) bestimmt wird.

10. Verfahren nach Anspruch 4, wobei in der Synchronisationsphase die systemspezifische Verzögerungszeit (Δt_{del}) bestimmt wird.

11. Positionsmesseinrichtung zur Positionsbestimmung zweier zueinander beweglicher Objekte, wobei
- die Positionsmesseinrichtung (10) zur Übertragung von Daten an eine nachgeordnete Auswerteeinheit (30) ausgebildet ist, indem die Auswerteeinheit (30) mittels Abfragetaktpulsen (ATP), die durch bestimmte Abfrage-Taktzeiten (Δt_{NC}) getrennt sind, die Übertragung von Daten von der Positionsmesseinrichtung (10) anfordert und
- der Betrieb einer Lichtquelle (11) der Positionsmesseinrichtung (10) getaktet erfolgt, wobei zwischen zeitlich aufeinanderfolgenden Licht quellen-Erregerpulsen (LP) eine definierte Lichtquellen-Taktzeit (Δt_{LQ}) liegt,
**dadurch gekennzeichnet, dass**
- die Vorrichtung derart ausgebildet ist, das nach der in einer Initialisierungsphase erfolgenden gezielten Abstimmung der Lichtquellen-Taktzeit (Δt_{LQ}) auf die Abfrage-Taktzeit (Δt_{NC}) zwischen den Abfragetaktpulsen (ATP), im Messbetrieb eine zeitliche Synchronität zwischen den Lichtqueilen-Erregerpuisen (LP) und den Abfragetaktpulsen (ATP) gewährleistet ist.

12. Vorrichtung nach Anspruch 11, wobei die Positionsmesseinrichtung (10) zur Übertragung von absoluten Positionsdaten (POS) als Daten an die Auswerteeinheit (30) ausgebildet ist.

13. Vorrichtung nach Anspruch 12, wobei zur Synchronisation der Licht quellen-Taktzeit (At_{LQ}) mit der Abfrage-Taktzeit (Δt_{NC}) ferner eine systemspezifische Verzögerungszeit (Δt_{del}) berücksichtigt ist, die zwischen einem Lichtquellen-Erregerpuls (LP) und der tatsächlichen Bestimmung der Daten resultiert.

14. Vorrichtung nach Anspruch 13, wobei die Abfrage-Taktzeit (Δt_{LQ}) der jeweiligen Auswerteeinheit (30) und die systemspezifische Verzögerungszeit (Δt_{del}) in einem Speicher (17) der Positionsmesseinrichtung (10) abgelegt sind.

## Claims

1. Method for operating an optical position measuring device for position determination of two mutually moving objects,
- data being transmitted from the position measuring device (10) to a subsequent evaluation unit (30) in that the evaluation unit (30) requests the transmission of data from the positioning measuring device (10) by means of enquiry cycle pulses (ATP) which are separated by specific enquiry cycle times (Δt_{NC}),
- the light source (11) of the position measuring device (10) being operated in a cycle, a defined light source cycle time (ΔT_{LQ}) being present between temporally successive light source exciter pulses (LP);
**characterised in that**
- in an initialisation phase, the light source cycle time (Δt_{LQ}) is coordinated specifically to the enquiry cycle time (Δt_{NC}) between the enquiry cycle pulses (ATP) so that a temporal synchronicity between the light source exciter pulses (LP) and the enquiry cycle pulses (ATP) is ensured in the measuring operation.

2. Method according to claim 1, absolute position data (POS) being transmitted from the position measuring device (10) as data to the evaluation unit.

3. Method according to claim 2, in addition a system-specific delay time (Δt_{del}) being taken into account for synchronisation of the light source cycle time (ΔT_{LQ}) with the enquiry cycle time (Δt_{NC}), said delay time resulting between a light pulse (LP) and the actual determination of the data in the position measuring device (10).

4. Method according to claim 1, the mutually moveable objects being stationary in the synchronisation phase.

5. Method according to claim 4, a warning signal being produced in the case of a relative movement of the two objects in the synchronisation phase.

6. Method according to claim 1, the enquiry cycle time (Δt_{NC}) being monitored and a warning signal being produced in the case of a changing enquiry cycle time (Δt_{NC}).

7. Method according to claim 6, the synchronisation being implemented again after production of the warning signal.

8. Method according to claim 6, an alarm bit being transmitted from the position measuring device (10) to the evaluation unit (30) as warning signal.

9. Method according to claim 4, the enquiry cycle time (ΔT_{NC}) of the respective evaluation unit (30) being determined in the synchronisation phase.

10. Method according to claim 4, the system-specific delay time (Δt_{del}) being determined in the synchronisation phase.

11. Position measuring device for position determination of two mutually moveable objects,
- the position measuring device (10) being configured for transmission of data to a subsequent evaluation unit (30) in that the evaluation unit (30) requests the transmission of data from the position measuring device (10) by means of enquiry cycle pulses (ATP) which are separated by specific enquiry cycle times (Δt_{NC}) and
- the operation of a light source (11) of the position measuring device (10) being effected in a cycle, a defined light source cycle time (Δt_{LQ}) being present between temporally successive light source exciter pulses (LP),
**characterised in that**
- the device is configured in such a manner that, after the specific coordination of the light source cycle time (Δt_{LQ}) to the enquiry cycle time (Δt_{NC}) between the enquiry cycle pulses (ATP) which is effected in an initialisation phase, a temporal synchronicity between the light source exciter pulses (LP) and the enquiry cycle pulses (ATP) is ensured in the measuring operation.

12. Device according to claim 11, the positioning measuring device (10) being configured for transmission of absolute position data (POS) as data to the evaluation unit (30).

13. Device according to claim 12, in addition a system-specific delay time (Δt_{del}) being taken into account for synchronisation of the light source cycle time (Δt_{LQ}) with the enquiry cycle time (Δt_{NC}), said delay time resulting between a light source exciter pulse (LP) and the actual determination of the data.

14. Device according to claim 13, the enquiry cycle time (Δt_{LQ}) of the respective evaluation unit (30) and the system-specific delay time (Δt_{del}) being stored in a memory (17) of the position measuring device (10).

## Revendications

1. Procédé pour faire fonctionner un dispositif optique de mesure de position servant à déterminer la position relative de deux objets mobiles, selon lequel :
- du dispositif de mesure de position (10) sont transmises des données à une unité d'évaluation (30) située en aval et qui, par des impulsions cadencées d'appel (ATP) séparées par des temps de cycle d'appel (Δt_{NC}) définis, demande que soient transmises les données provenant du dispositif de mesure de position (10),
- la source lumineuse (11) du dispositif de mesure de position (10) fonctionne en cadence, avec entre deux impulsions d'excitation de source (LP) qui se suivent, un temps de cycle de source lumineuse (ΔT_{LQ}) défini,
**caractérisé en ce que**
- dans une phase d'initialisation, le temps de cycle de source lumineuse ((Δt_{LQ}) est accordé de manière ciblée au temps de cycle d'appel (Δt_{NC}) séparant les impulsions d'appel (ATP), de sorte qu'en fonctionnement de mesure, une synchronisation est assurée entre les impulsions d'excitation de source lumineuse (LP) et les impulsions cadencées d'appel (ATP).

2. Procédé selon la revendication 1, **caractérisé en ce que** du dispositif de mesure de position (10) sont transmises à l'unité d'évaluation, comme données, des données absolues de position (POS).

3. Procédé selon la revendication 2, **caractérisé en ce que** pour synchroniser le temps de cycle de source lumineuse (Δt_{LQ}) avec le temps de cycle d'appel (Δt_{NC}) est pris de plus en compte un temps de retard (Δt_{del}), spécifique au système, entre une impulsion lumineuse (LP) et la détermination effective des données dans le dispositif de mesure de position (10).

4. Procédé selon la revendication 1, selon lequel les objets mobiles qui se suivent sont à l'arrêt pendant la phase de synchronisation.

5. Procédé selon la revendication 1, selon lequel un signal d'avertissement est produit dans le cas où les deux objets se déplacent l'un par rapport à l'autre pendant la phase de synchronisation.

6. Procédé selon la revendication 1, selon lequel le temps de cycle d'appel (Δt_{NC}) est surveillé et s'il varie, un signal d'avertissement est produit.

7. Procédé selon la revendication 6, selon lequel la synchronisation est effecuée à nouveau après la production du signal d'avertissement.

8. Procédé selon la revendication 6, selon lequel comme signal d'avertissement, un bit d'alarme est transmis du dispositif de mesure de position (10) à l'unité d'évaluation (30).

9. Procédé selon la revendication 4, selon lequel le temps de cycle d'appel (ΔT_{NC}) de l'unité d'évaluation correspondante (30) est défini pendant la phase de synchronisation.

10. Procédé selon la revendication 4, selon lequel le temps de retard (Δt_{del}) spécifique au système est défini pendant la phase de synchronisation.

11. Dispositif de mesure de position (10), pour mesurer la position de deux objets mobiles l'un par rapport à l'autre,
- qui est constitué pour transmettre des données à une unité d'évaluation (30) disposée en aval et qui, par des impulsions cadencées d'appel (ATP) séparées par des temps de cycle d'appel (Δt_{NC}) définis, demande que lui soient transmises des données provenant du dispositif de mesure de position (10),
- qui comporte une source lumineuse (11) fonctionnant en cadence avec entre deux impulsions d'excitation de source (LP) qui se suivent, un temps de cycle de source lumineuse (ΔT_{LQ})
**caractérisé en ce que** le dispositif est constitué de manière qu'après réalisation pendant une phase d'initialisation, de l'accord ciblé entre le temps de cycle de source lumineuse (Δt_{LQ}) et le temps de cycle d'appel (Δt_{NC}) séparant les impulsions d'appel (ATP), en fonctionnement de mesure une synchronisation est assurée entre les impulsions d'excitation de source lumineuse (LP) et les impulsions cadencées d'appel (ATP).

12. Dispositif selon la revendication 11, dans lequel le dispositif de mesure de position (10) est conçu pour transmettre à l'unité d'évaluation, comme données, des données absolues de position (POS).

13. Dispositif selon la revendication 12, **caractérisé en ce que** pour synchroniser le temps de cycle de source lumineuse (ΔT_{LQ}) avec le temps de cycle d'appel (Δt_{NC}) est pris de plus en compte un temps de retard (Δt_{del}), spécifique au système, entre une impulsion lumineuse (LP) et la détermination effective des données dans le dispositif de mesure de position (10)

14. Dispositif selon la revendication 13, dans lequel le temps de cycle d'appel (Δt_{NC}) de l'unité d'évaluation (30) correspondante et le temps de retard (Δt_{del}) spécifique au système sont déposés dans une mémoire (17) du dispositif de mesure de position (10).
